# EUROPEAN PATENT APPLICATION

(11) **EP 4 790 981 A1**
(43) Date of publication of application: **12.08.2026**
(21) Application number: 25155940.7
(22) Date of filing: 05.02.2025
(51) Int. Cl.: H04N 7/18, G08B 13/196, H04N 21/6583

(54) **A METHOD FOR ENABLING VIDEO RECREATION**

(71) Applicant: Axis AB, 223 69 Lund (SE)
(72) Inventor: Cremon, Jonas, 223 69 LUND (SE); Sternerup, Johan, 223 69 LUND (SE); Norda, Hannes, 223 69 LUND (SE); Courel, Sebastian, 223 69 LUND (SE); Johansson, Frans, 223 69 LUND (SE)
(74) Representative: AWA Sweden AB

(57) **Abstract**

The present invention generally relates to a computer-implemented method for enabling video recreation, comprising: acquiring (S102), by a camera control unit (112), a video stream (300) comprising a set of image data packages (302, 303) each comprising coded image frames; transmitting (S104), by the control unit (112), at least a portion of the video stream to a client (116) across a communication network (114), receiving (S106), by the control unit (112), an acknowledgement message (306) for each image data package (303) that was successfully received by the client (116), storing (S108), in a digital memory (108) accessible to the control unit (112), the image data packages (303) for which an acknowledgement message (306) is received, and indications of successful receipt (308) at the client (116) of the corresponding image data packages (303).

## Description

### TECHNICAL FIELD

The present invention generally relates to the field of camera surveillance, and in particular to a method for enabling video recreation. The present invention further relates to a corresponding control unit, a camera, and a computer program product.

### BACKGROUND

In applications where live streaming from a camera to a remote client, such as to a central controller, there may be a desire or even a regulatory need to later replay the video. For example, a live stream from a camera carried by a police officer or hospital personnel may be subject to a requirement to be able to replay later to review decisions made at the time of the video live stream.

However, the live stream from the camera to the remote client may not be complete due to, for example, network issues and data losses. This means that the decisions made during the live stream are made based on a potentially incomplete live stream. Therefore, during a later review of the situation and decisions made, it is unsuitable to review a complete video recording that has not suffered from, for example, data losses that cause glitches and missing frames in the live stream.

Accordingly, there is room for improvements with regard to enabling accurate replay of live streamed videos.

### SUMMARY

In view of above-mentioned and other drawbacks of the prior art, it is an object of the present invention to provide a method for enabling video recreation that alleviates at least some of the drawbacks of prior art.

According to a first aspect of the present invention, it is therefore provided a computer-implemented method for enabling video recreation, comprising: acquiring, by a camera control unit, a video stream comprising a set of image data packages each comprising coded image frames; transmitting, by the control unit, at least a portion of the video stream to a client across a communication network, receiving, by the control unit, an acknowledgement message for each image data package that was successfully received by the client, and storing, in a digital memory accessible to the control unit, the image data packages for which an acknowledgement message is received, and indications of successful receipt at the client of the corresponding image data packages.

The present invention is based upon the realization of storing information about which image data packages that reached the client and storing the corresponding image data packages on the camera side. This means that the stored image data packages can be used for recreating the same video that was live-streamed at the client. The acknowledgement messages are only transmitted from the client once the corresponding image data package is received. In other words, once the acknowledgement message is received by the camera control unit, it is assumed that the corresponding image data package was successfully delivered to the client as part of the live stream, and in response, the corresponding image data package is stored along with the indication of successful receipt

Storing the information indicating successful receipt of image data packages and the corresponding image data packages allows for later recreation of the live stream that the viewer at the client saw. This enables a subsequent review of the information that the viewer on the client side had at hand at the time of taking decisions based on the live stream.

A video stream is generally a set of consecutive image frames captured over time. The consecutive image frames are encoded into data packages that collectively form the video stream.

The client may include a computer-based station or mobile device such as a mobile phone or tablet with live streaming capabilities. The client may for example be able to run a web-based live streaming protocol. A live stream allows for real-time streaming of the video received over the communication network.

The acknowledgement message provides information that a certain image data package was received at the client. In other words, an image data package is produced in the camera and transmitted to the client. Upon receipt of the image data package by the client, a return acknowledgement message is transmitted to the camera control unit to indicate that the package was received. Upon receipt of the acknowledgement message, an indication of the successful receipt, at the client, of the image data package is stored at the camera side.

The indication of successful receipt may include information identifying the corresponding image data package and a timestamp thereof to facilitate later recreation of the video stream.

In one embodiment, the acknowledgement messages may include the indications of successful receipt, and in this case, the step of storing comprises storing the received acknowledgement messages. In other words, the acknowledgment message may be the indication of successful receipt and may therefore be stored in the digital memory to facilitate later video recreation. In this way, the accuracy in knowing which image data packages were received at the client is improved since the acknowledgment messages are only transmitted from the client side upon receipt of an image data package. If an image data package is not received, no acknowledgment message is transmitted and therefore not received by the camera.

The digital memory is accessible to the camera. The location of the digital memory is not limited as long as the camera control unit can access the digital memory to store data on it. However, in preferred embodiments, the camera comprises the digital memory. This reduces impact of network issues on the storing capability, in particular for movable cameras such as body worn cameras. The digital memory may for example be a SD card movable mounted in the camera.

In embodiments, only image data packages that are acknowledged as being received by the client are stored in the digital memory. This advantageously reduces the need for excessively large storage space and/or for storing longer videos.

In one embodiment, the method may further comprise: storing, in the digital memory, a greater amount of image data packages than the amount of image data packages that are acknowledged as being received by the client. In other words, image data packages other than the ones received by the client may be stored in the digital memory. This allows for, if need be, to recreate a video that corresponds closer to what occurred at the scene captured by the camera.

In one embodiment, the method may comprise storing, in the digital memory, all image data packages that are acquired by the camera. This advantageously allows for recreating the full video.

In one embodiment, the acknowledgement messages are received directly by the camera from the client. In other words, the communication between the client and the camera, and vice versa, is end-to-end. That is, information and data transmitted between the camera and the client does not pass through any intermediate communication nodes. With the communication across the network being end-to-end, the camera may serve as a first endpoint and the client as a second endpoint.

In one embodiment, the step of transmitting may comprise transmitting the at least a portion of the video stream to more than one client, whereby the method may comprise receiving and storing client-specific identification data that associates each client with the respective image data packages received by the respective client. Advantageously, one camera can generate and transmit image data packages to more than one client enabling live-streaming at more than one location. To enable individual recreation of the videos that were live streamed at the different clients, client-specific identification data for each image data package that is acknowledged as received is also stored along with the image data package. This advantageously enables individual video recreation of the video streamed at the respective client. For example, a video streamed at a first client may have different data package losses compared to the video streamed at a second client. The client-specific identification data allows for separately recreating the video streamed at the first client and the video streamed at the second client.

In one embodiment related to transmitting the at least a portion of the video stream to more than one client and storing client-specific identification data, the method may comprise storing, in the digital memory, one set of image data packages including the image data packages received by any one of the clients, and storing, in the digital memory, the client-specific identification data for each client. In other words, the camera control unit only stores one copy of each image data package. The client-specific identification data includes information that identifies which of the stored image data packages in the set of image data packages that a specific client received. Storing only a single copy of each image data package advantageously relieves the storage capacity requirements and saves storage capacity.

In embodiments, the acknowledgement messages may include client specific identification data. Thus, once an image data package is received at a client, the returned acknowledgement message may serve to indicate successful receipt of the image data package and to identify which client the acknowledgement message was transmitted from.

In embodiments, the method may comprise, recreating, by the control unit, a video from the stored image data packages. That is, a video may be recreated by the control unit such that, if requested, a recreated video that shows the prior live stream at the client/clients can be replayed. The video may be played elsewhere although the video data file with the correct order of image data packages can be generated in the camera. The recreated video may be played directly from the camera, or it may be downloaded from the digital memory to a computer or mobile device for viewing.

In embodiments, the method may comprise uploading the recreated video stream to a server. This allows freeing up space on the digital memory and for making it available to users in a straight-forward way. The camera control unit may request the transmission of the recreated video to the server using communication technology of the camera.

That the digital memory is accessible to the camera may be that the digital memory is internal memory of the camera, such as a non-volatile flash memory like a secure digital (SD) card. A further possible internal memory is a random-access memory (RAM). However, the memory storage may in other developments be external to the camera but at the location near the camera, for example connected via data transfer cables such as USB or network cables or similar.

According to a second aspect of the present invention, there is provided a control unit arranged to perform the method of the first aspect and embodiments thereof.

Further embodiments of, and effects obtained through this second aspect of the present invention are largely analogous to those described above for the first aspect of the invention.

According to a third aspect of the present invention, there is provided a camera comprising a digital memory and a control unit according to the second aspect.

Further embodiments of, and effects obtained through this third aspect of the present invention are largely analogous to those described above for the first aspect and the second aspect of the invention.

According to a fourth aspect of the present invention, there is provided a computer program product comprising program code for performing, when executed by a control unit, the method of any of the herein discussed embodiments.

Further embodiments of, and effects obtained through this fourth aspect of the present invention are largely analogous to those described above for the other aspects of the invention.

Further features of, and advantages with, the present invention will become apparent when studying the appended claims and the following description. The skilled addressee realizes that different features of the present invention may be combined to create embodiments other than those described in the following, without departing from the scope of the present invention.

### BRIEF DESCRIPTION OF THE DRAWINGS

The various aspects of the invention, including its particular features and advantages, will be readily understood from the following detailed description and the accompanying drawings, in which:
Fig. 1 conceptually illustrates an example application of embodiments of the invention;
Fig. 2 is a flow-chart of method steps according to embodiments of the invention;
Fig. 3 is a block diagram that illustrates a camera, a client, and the transmission and storing of image data package and acknowledgement messages according to embodiments of the invention;
Fig. 4 is a block diagram that illustrates a camera, multiple clients and the transmission and storing of image data package and acknowledgement messages according to embodiments of the invention;
Fig. 5 is a flow-chart of method steps according to embodiments of the invention;
Fig. 6 is a flow-chart of method steps according to embodiments of the invention; and
Fig. 7 is block-diagram of a camera according to embodiments of the invention.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

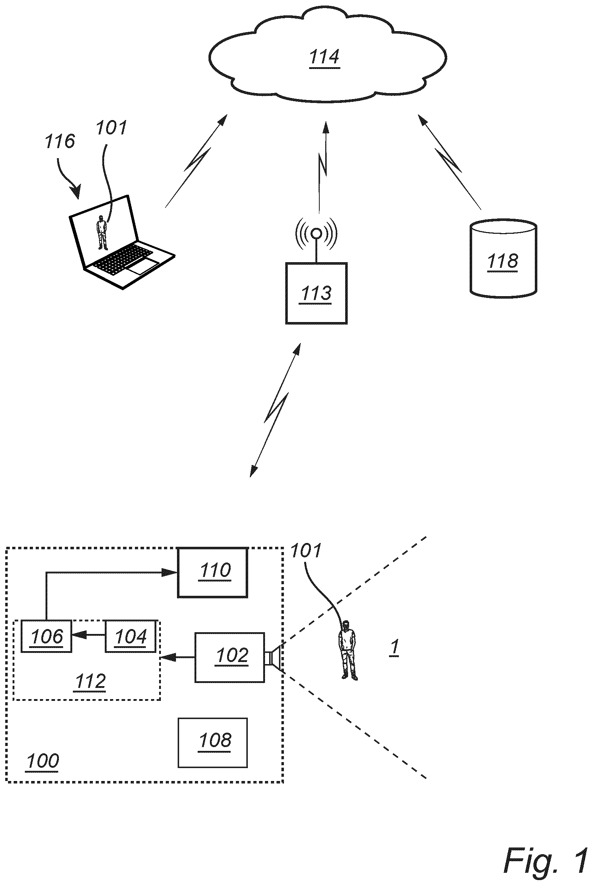

Turning now to the drawings and to fig 1 in particular, there is shown a scene 1 being monitored by an image acquisition device 100, e.g., a network camera or a network surveillance camera. In the scene 1, there is an object, here being a person 101 that is captured in a live-stream by the camera 100.

The camera 100 may generally be mounted on a building, on a pole, or in any other suitable position depending on the specific application at hand. Further the camera 100 may be a fixed camera or a movable camera such as pan, tilt and zoom, or a body worn camera. Further, the camera 100 may be a visible light camera, an infrared (IR) sensitive camera or a thermal (long-wavelength infrared (LWIR)) camera.

The camera 100 is continuously monitoring the scene 1 by capturing image frames forming a video stream of the scene 1. The scene 1 that is within the field of view of the camera 100 is here exemplified as including a person 101 that may be in need of assistance or surveillance. The camera 100 is configured to transmit the video stream over a communication link 113 connected to a communication network 114 having a transmission capacity, i.e., a bandwidth, to a client 116 or optionally to a server 118 where video stream may be stored in some embodiments. At the client 116, the video stream is observed by a user as a live stream.

The camera 100 further comprises an image capturing module 102, an image processing pipeline 104, an encoder 106, a digital memory storage device 108, and an input and output interface 110 configured as a communication interface between the camera 100 and the communication network 114 via the communication link 113.

The image capturing module 102 comprises various components such as a lens and an image sensor, where the lens is adapted to project an image onto the image sensor comprising multiple pixels.

The image processing pipeline 104 may be configured to perform a range of various operations on image frames received from the image sensor. Such operations may include filtering, demosaicing, color correction, noise filtering for eliminating spatial and/or temporal noise, distortion correction for eliminating effects of e.g., barrel distortion, global and/or local tone mapping, e.g., enabling imaging of scenes containing a wide range of intensities, transformation, e.g., rotation, flat-field correction, e.g., for removal of the effects of vignetting, application of overlays, e.g., privacy masks, explanatory text, etc. However, it should be noted that some of these operations, e.g., transformation operations, such as correction of barrel distortion, rotation, etc., may be performed by one or more modules, components or circuits arranged outside the image processing pipeline 104, for example in one or more units between the image processing pipeline 104 and the encoder 106.

Following the image processing pipeline 104, the image frames are forwarded to the encoder 206, in which the image frames are encoded according to an encoding protocol, packaged into image data packages, and forwarded to a receiver, e.g., the client 116 and optionally to the server 118, over the communication network 114 using the input/output interface 110.

There are a number of conventional video encoding formats. Some common video encoding formats that work with the various embodiments of the present invention include: JPEG, Motion JPEG (MJPEG), High Efficiency Video Coding (HEVC), also known as H.265 and MPEG-H Part 2; Advanced Video Coding (AVC), also known as H.264 and MPEG-4 Part 10; Versatile Video Coding (VVC), also known as H.266, MPEG-I Part 3 and Future Video Coding (FVC); VP9, VP10 and AOMedia Video 1 (AV1), just to give some examples.

It should be noted that the camera 100 illustrated in fig. 1 may also include numerous other components, such as processors, additional memories, etc., which are common in conventional camera systems and whose purpose and operations are well known to those having ordinary skill in the art. Such components have been omitted from the illustration and description of fig. 1 for clarity reasons.

The camera 100 also comprises a digital memory storage device 108 for storing for example image data packages and other data that will be further described below. The memory storage device 108 may be a non-volatile memory, such as an SD card.

The camera 100 further comprises a camera control unit 112 configured to perform the various steps described herein. The image processing pipeline 104 and the encoder 106 may be operative on the control unit 112. The camera 100 preferably comprises the control unit 112 and is provided as a single unit with the camera 100 e.g., with a common housing.

When monitoring the scene 1, the camera 100 continuously captures image frames that jointly form a video stream using the image capturing module 102, processes the image frames in the image processing pipeline 104, encodes the processed data in encoder 106, and directly transmits the encoded image frames as image data packages over the communication network 114 to the client 116 as a live-stream.

However, if the connection across the network is poor and causes glitches and data losses while transmitting a live video stream, the live video stream observed at the client 116 will not be the same as the full recording made by the camera 100. In other words, fewer image data packages may reach the client 116 than what is acquired at the camera 100.

To alleviate this problem, the inventors propose a method where the control unit 112 can keep track of which image data packages that were received by the client 116. For this, the control unit 112 receives an acknowledgement message each time that an image data package is received by the client 116. This allows the control unit 112 to store indications of which image data packages that reached the client 116 and to store the corresponding image data packages such that the video stream viewed at the client 116 can be recreated at a later time.

Furthermore, in situations where the live video is viewed in for example a web browser or a mobile phone, it is impractical or even impossible to record the viewed video on the client side, for technical reasons but also sometimes for legal reasons. The proposed solution alleviates also this problem by instead storing the viewed video on the camera side.

Embodiments of the invention will now be described in more detail with reference to the drawings.

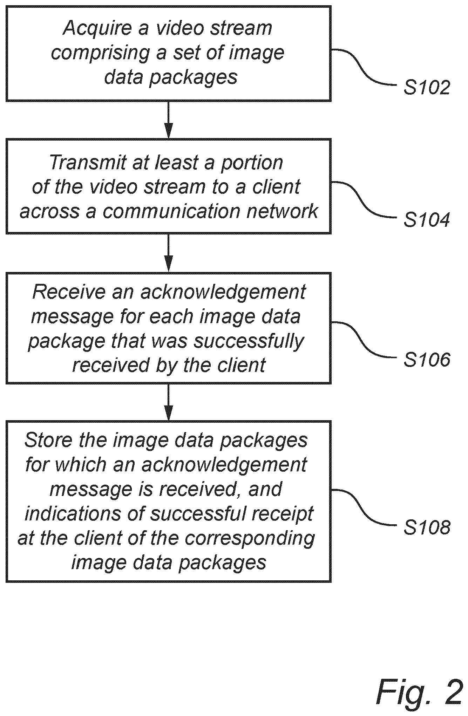

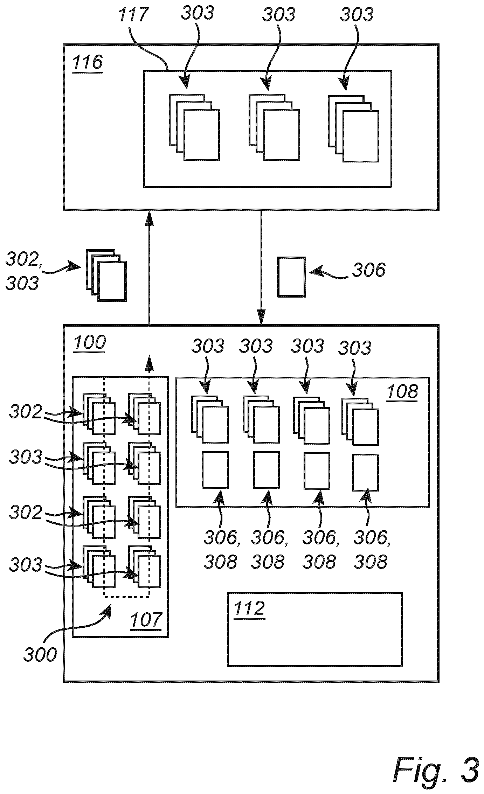

Fig. 2 is a flow-chart of method steps according to embodiments of the invention. Fig. 3 is a block diagram that illustrates a camera 100, a client 116, and the transmission and storing of image data packages and acknowledgement messages according to embodiments of the invention.

Herein a computer-implemented method is provided for enabling video recreation.

In step S102, acquiring, by a camera control unit 112, a video stream 300 comprising a set of image data packages 302, 303 each comprising coded image frames. The camera control unit 112 computes image data packages 302, 303 of coded image frames as new image frames are captured by the camera 100. Here, only an example number of image data packages are shown. While being processed by the control unit 112, the acquired image data packages 302, 303 are stored on a memory 107.

In step S104, transmitting, by the control unit 112, at least a portion of the video stream to a client 116 across a communication network 114. Once the control unit computes an image data package 302, 303, it is transmitted to the client 116. The received data package 303 are shown on the client side 116 as a live stream on a display 117.

In step S106, receiving, by the control unit 112, an acknowledgement message 306 for each image data package 303 that was successfully received by the client 116. In other words, the control unit 112 of the camera 100 receives information that an image data package 303 was successfully received at the client 116. If an image data package 302 was lost somewhere in the transmission or for any other reason was not received at the client 116, an acknowledged message 306 is not transmitted from the client 116 and is therefore not received by the control until 112 of the camera 100.

In step S108, storing, in a digital memory 108 accessible to the control unit 112, the image data packages 303 for which an acknowledgement message 306 is received by the control unit 112, and indications 308 of successful receipt at the client 116 of the corresponding image data packages 303. The indications 308 of successful receipt may include for example meta data from the image data packages 303 such as time stamps and/or identification data for the respective image data package 303. In some embodiments, the acknowledgement messages 306 themselves include the indications of successful receipt. In this case, the step S108 of storing comprises storing the received acknowledgement messages 306. In preferred embodiments, the camera 100 comprises the digital memory 108. In other words, the image data packages 303 and the indications 308 or acknowledgement messages 306 are stored locally in the camera 100.

In some embodiments, only the image data packages 303 for which an acknowledgement message is received are stored in the memory 108. This advantageously saves storage space in the memory 108. However, in some embodiments, the step S108 of storing includes storing, in the digital memory 108, a greater amount of image data packages 303 than the amount of image data packages that are acknowledged as received by the client 303. In other words, a larger amount of video data is stored in the memory 108 than is successfully received at the client 116. This allows for recreating a more complete video than what was originally shown in the live stream at the client 116. However, it is still possible to recreate what was seen at the client 116 by recreating a video stream using only image data packages for which an acknowledgement message 306 was received by the camera 100. Advantageously, since the same image data packages 303 are stored on the camera side as were successfully received by the client 116, any decoding issues at the client side due to incomplete frame sequences, e.g., I-frame and P-frame sequence, is reflected also in the stored image data packages 303 at the camera side. Thus, also decoding issues on the client side are captured by the sequence of image data packages 303 stored in the camera and will be reproduced when recreating the live stream using the stored image data packages 303.

It is envisaged that all image data packages 302, 303 acquired by the camera 100 may be stored in the digital memory 108.

The communication between the client 116 and the camera 100 is preferably so called end-to-end. In other words, the acknowledgement messages 306 are received directly by the camera 100 from the client 116. In this case, the camera 100 serves as a first endpoint and the client 116 as a second endpoint. The communication is in this case between the first end point to the second end point without intermediate communication or node(s).

In addition, the acknowledgement messages may include client specific identification data. This allows for identifying the client 116 that received the image data package 302, 303. Client specific identification data may be realized as for example an ID number or name or ID address for the client such as an IP address or an ID number identifying a human user in a database.

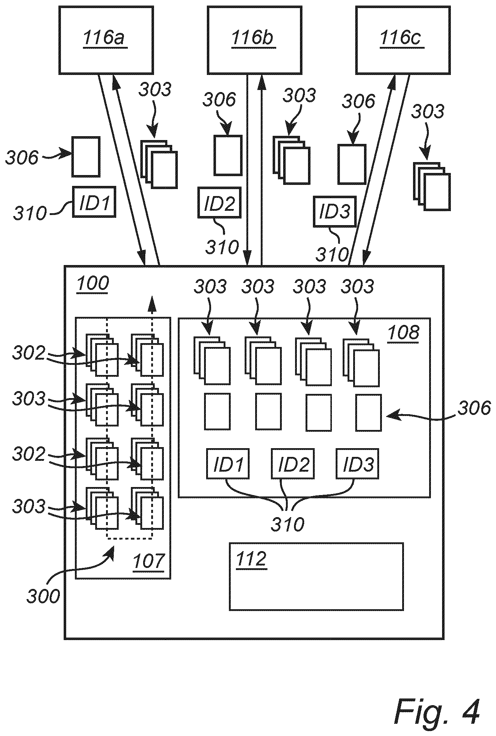

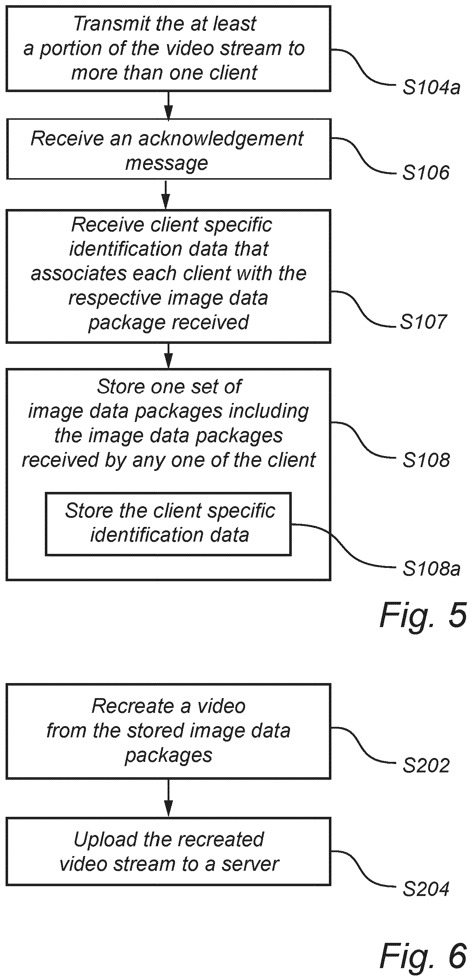

Turning to fig. 4, it is envisaged that the camera 100 transmits image data packages 302, 303 to more than one client 116a, 116b, 116c. In other words, more than one live-stream is running in parallel at more than one client 116a-c. The number of clients may vary but is here illustrated as three. In this case, the step S104 of transmitting, comprises transmitting the at least a portion of the video stream to more than one client 116a-c as included in step S104a in the flow-chart of fig. 5. In other words, the camera 100 transmits the image data packages 303 to all of multiple clients 116a-c. For each of the received image data packages 303, the clients 116a-c returns an acknowledgement message 306 which is received by the camera as in step S106. Furthermore, the camera control unit 112 also receives and stores, in step S107 and S108a, client-specific identification data 310 that associates each client with the respective image data packages 303 received. The client-specific identification data 310 allows for determining at a later stage the image data packages that were received by the respective client 116a-c.

In the case of multiple clients 116a-c only one copy of each successfully received image data package 303 is stored in the digital memory 108. Therefore, when multiple clients are involved, the storing step S108, comprises storing, in the digital memory 108, one set of image data packages including the image data packages received by any one of the clients 116a-c. The client-specific identification data 310 is stored for each client 116a-c in step S108a.

Fig. 6 is a flow-chart of method steps according to embodiments of the invention.

In step S202, recreating, by the control unit 112, a video from the stored image data packages 303. That is, the control unit 112 can form a video from the stored image data packages 303. Data from acknowledgment messages 306, indications 308, or meta data from the image data packages 303 themselves can be used for placing the image data packages 303 in the correct order to form a video. The video can be played directly from the camera 100 connected to a video device that can show a video, i.e., including a display and suitable software.

Optionally, in step S204, the control unit 112 uploads the recreated video stream to a server 118.

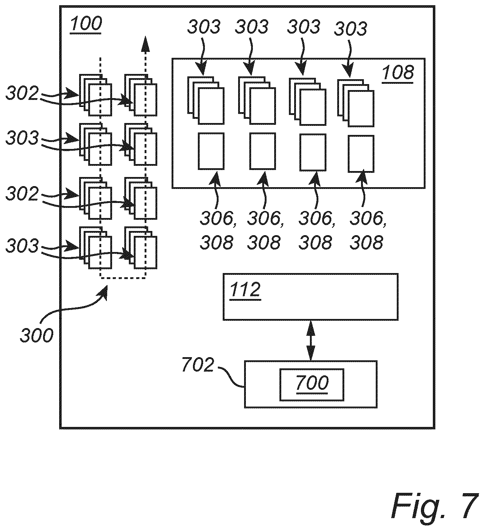

Fig. 7 is a block diagram of a camera 100. The camera 100 comprises a camera control unit 112 and a digital memory 108. The camera control unit 112 acquires, using an image capturing module and an encoder a video stream 300 comprising a set of image data packages 302, 303, each comprising coded image frames.

The control unit 112 transmits at least a portion of the video stream to a client across a communication network.

The control unit 112 receives an acknowledgement message 306 for each image data package 303 that was successfully received by the client.

The control unit 112 stores, in the digital memory 108 accessible to the control unit 112, the image data packages 303 for which an acknowledgement message 306 is received, and indications 308 of successful receipt at the client of the corresponding image data packages 303.

The control unit 112 may have access to a computer program product 700 comprising program code for performing, when executed by a control unit, the method described herein. The computer program product 700 is stored on a non-transitory memory storage device 702.

The computer program product includes code for: acquiring a video stream comprising a set of image data packages each comprising coded image frames, transmitting at least a portion of the video stream to a client across a communication network, receiving an acknowledgement message for each image data package that was successfully received by the client, and storing, in a digital memory accessible to the control unit, the image data packages for which an acknowledgement message is received, and indications of successful receipt at the client of the corresponding image data packages.

The control unit includes a microprocessor, microcontrol unit, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontrol unit or programmable digital signal processor mentioned above, the processor may further include computer executable code that controls operation of the programmable device.

The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Although the figures may show a sequence the order of the steps may differ from what is depicted. Also, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. Additionally, even though the invention has been described with reference to specific exemplifying embodiments thereof, many different alterations, modifications and the like will become apparent for those skilled in the art.

In addition, variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. A computer-implemented method for enabling video recreation, comprising:
acquiring (S102), by a camera control unit (112), a video stream (300) comprising a set of image data packages (302, 303) each comprising coded image frames;
transmitting (S104), by the control unit (112), at least a portion of the video stream to a client (116) across a communication network (114),
receiving (S106), by the control unit (112), an acknowledgement message (306) for each image data package (303) that was successfully received by the client (116),
storing (S108), in a digital memory (108) accessible to the control unit (112), the image data packages (303) for which an acknowledgement message (306) is received, and indications of successful receipt (308) at the client (116) of the corresponding image data packages (303).

2. The method according to claim 1, wherein the acknowledgement messages (306) include the indications of successful receipt (308), the step (S108) of storing comprises storing the received acknowledgement messages.

3. The method according to any one of claims 1-2, wherein the camera (100) comprises the digital memory (108).

4. The method according to any one of claims 1-3, further comprising:
storing (S108), in the digital memory, a greater amount of image data packages than the amount of image data packages that are acknowledged as received by the client.

5. The method according to any one of claims 1-4, further comprising:
storing (S108), in the digital memory, all image data packages that are acquired by the camera (100).

6. The method according to any one of claims 1-5, wherein the acknowledgement messages (306) are received directly by the camera (100) from the client (116).

7. The method according to any one of claims 1-6, wherein the step of transmitting comprises:
transmitting (S104a) the at least a portion of the video stream to more than one client (116a-c), the method comprises receiving (S107) and storing (S108a) client-specific identification data (310) that associates each client with the respective image data packages (303) received.

8. The method according to claim 7, comprising:
storing (S108), in the digital memory, one set of image data packages including the image data packages received by any one of the clients, and
storing (S108a), in the digital memory, the client-specific identification data for each client (116a-c).

9. The method according to any one of claims 1-8, wherein acknowledgement messages (306) include client specific identification data (310).

10. The method according to any one of claims 1-9, wherein communication across the network is end-to-end, with the camera (100) serving as a first endpoint and the client (116) as a second endpoint.

11. The method according to any one of claims 1-10, comprising:
recreating (S202), by the control unit, a video from the stored image data packages.

12. The method according to claim 11, comprising:
uploading (S204) the recreated video stream to a server.

13. A control unit (112) for performing the method according to any one of the preceding claims.

14. A camera (100) comprising a digital memory (108) and a control unit (112) according to claim 13.

15. A computer program product (700) comprising program code for performing, when executed by a control unit, the method of any one of claims 1 to 12.
